# EUROPÄISCHE PATENTSCHRIFT

(11) **EP 3 785 929 B1**
(45) Veröffentlichungstag und Bekanntmachung des Hinweises auf die Patenterteilung: **11.10.2023**
(21) Anmeldenummer: 20187096.1
(22) Anmeldetag: 22.07.2020
(51) Int. Cl.: B60C 1/00, C08L 9/06

(54) **KAUTSCHUKMISCHUNG UND FAHRZEUGLUFTREIFEN**
RUBBER COMPOSITION AND PNEUMATIC TYRE FOR A VEHICLE
MÉLANGE DE CAOUTCHOUC ET PNEUMATIQUE DE VÉHICULE

(30) Priorität: 26.08.2019 DE 102019212728
(43) Veröffentlichungstag der Anmeldung: 03.03.2021
(73) Patentinhaber: Continental Reifen Deutschland GmbH, 30165 Hannover (DE)
(72) Erfinder: Sà, Catarina, 30419 Hannover (DE); Pavon Sierra, Viktoria, 30419 Hannover (DE); Müller, Norbert, 30419 Hannover (DE)
(74) Vertreter: Continental Corporation

(56) Entgegenhaltungen:
- EP-A1- 3 450 204
- DE-A1-102015 210 422
- DE-T5-112014 001 128

## Beschreibung

Die Erfindung betrifft eine schwefelvernetzbare Kautschukmischung, enthaltend Kautschuke und wenigstens ein modifiziertes Dien-Polymer.

Ferner betrifft die Erfindung einen Fahrzeugluftreifen mit einem Laufstreifen, der zumindest zum Teil aus einer solchen, mit Schwefel vulkanisierten Kautschukmischung besteht.

Da die Fahreigenschaften eines Reifens, insbesondere eines Fahrzeugluftreifens, in einem großen Umfang von der Kautschukzusammensetzung des Laufstreifens abhängig sind, werden besonders hohe Anforderungen an die Zusammensetzung der Laufstreifenmischung gestellt. Durch den teilweisen oder vollständigen Ersatz des Füllstoffes Ruß durch Kieselsäure in Kautschukmischungen wurden die Fahreigenschaften in den vergangenen Jahren insgesamt auf ein höheres Niveau gebracht. Die bekannten Zielkonflikte der sich gegensätzlich verhaltenden Reifeneigenschaften bestehen allerdings auch bei kieselsäurehaltigen Laufstreifenmischungen weiterhin. So zieht eine Verbesserung des Nassgriffs weiterhin in der Regel eine Verschlechterung des Rollwiderstandes, der Wintereigenschaften und des Abriebverhaltens nach sich. Gleichzeitig wird je nach Veränderung der Mischung das Trockenbremsverhalten, welches vom Zielkonflikt aus Rollwiderstand und Nassbremsen weitestgehend unabhängig ist, ebenfalls beeinträchtigt.

Um die Zielkonflikte im Laufstreifen zu lösen, sind schon vielfältige Ansätze verfolgt worden. So hat man beispielsweise unterschiedlichste, auch modifizierte Polymere, Harze, Weichmacher und hochdisperse Füllstoffe für Kautschukmischungen eingesetzt und man hat versucht, die Vulkanisateigenschaften durch Modifikation der Mischungsherstellung zu beeinflussen.

Aus der EP 1 052 270 A1 sind z. B. Laufstreifenmischungen auf Basis von Ruß als Füllstoff bekannt, die für einen guten Griff auf Eis unter anderem ein flüssiges Polymer, z. B. Polybutadien, enthalten.

Aus der DE 3 804 908 A1 sind ebenfalls Laufstreifenmischungen auf Basis von Ruß als Füllstoff bekannt, die für gute Wintereigenschaften flüssiges Polybutadien enthalten. Flüssiges Polybutadien mit hohem Vinylgehalt und einer hohen Glasübergangstemperatur (T_{g}) wird in der EP 1 035 164 A1 für Reifenlaufstreifen als Ersatz für herkömmliche Weichmacheröle vorgeschlagen.

Die DE 10 2008 058 996 A1 und die DE 10 2008 058 991 A1 offenbaren als Ersatz für übliche Weichmacheröle endständig amin-modifizierte flüssige Polybutadiene bzw. carboxyl-endständig modifizierte flüssige Polybutadiene in Laufstreifenmischungen mit einer hohen Menge an Synthesekautschuk. Die Reifen sollen sich durch eine sehr gute Ausgewogenheit zwischen niedrigem Kraftstoffverbrauch und guten Hafteigenschaften und die Fähigkeit zur Unterdrückung der Rissbildung am Boden von Profilrillen unter gleichzeitiger Wahrung der Verschleißfestigkeit auszeichnen.

Die EP 2 060 604 B1 offenbart eine Kautschukmischung enthaltend ein funktionalisiertes Polymer mit einem M_{w} von 20000 g/mol sowie Ruß als Füllstoff in Kombination mit 60 phr Naturkautschuk.

Die EP 3 450 204 A1 offenbart einen Kautschukmischung für Laufstreifen enthaltend mehr als 5 phr natürlichers Polyisopren, wenigstens einen weiteren Dienkautschuk und wenigstens ein modifiziertes Dien-Polymer A mit einem gewichtsmittleren Molekulargewicht M_{w}gemäß GPC von 500 bis 50000 g/mol, welches mit einer Organosilicium Gruppe endständig modifiziert ist.

In der US 2002/0082333 A1 wird zur Verbesserung der Prozessierbarkeit ein mit Triethoxysilan modifiziertes Polybutadien mit niedrigem Molekulargewicht anstelle eines Silans in einer NR-freien Kautschukmischung auf Basis von Synthesekautschuk und Kieselsäure als Füllstoff eingesetzt.

Auch die US 2014/0121316 A1 beschreibt endständig siloxan-modifizierte Polybutadiene mit niedrigem Molekulargewicht, die in Kautschukmischungen zur Verbesserung von Reifeneigenschaften führen. Als Vergleich wird in der US 2014/0121316 A1 ein "grafted" siloxan-modifiziertes Polybutadien genannt.

Die Verwendung von im Stand der Technik bekanntem endständig modifiziertem flüssigem Polybutadien zur Verbesserung der Eigenschaften von Kautschukmischungen bewirkt in der Regel eine Verringerung der Hysterese der Kautschukmischung und wirkt sich damit positiv auf den Rollwiderstand von Reifen aus. Gleichzeitig steht die Verringerung der Hysterese aber im Zielkonflikt mit dem Bremsverhalten von Reifen auf nasser und trockener Fahrbahn. Auch das Verarbeitungsverhalten und die Grünfestigkeit von Kautschukmischungen, die diese Polybutadiene enthalten, sind nicht immer optimal. Der vorliegenden Erfindung liegt nun die Aufgabe zugrunde, eine Kautschukmischung bereitzustellen, die ein gutes Verarbeitungsverhalten und eine gute Grünfestigkeit der unvulkanisierten Mischung aufweist und im Vergleich zum Stand der Technik eine Verbesserung im Zielkonflikt aus Rollwiderstand und Bremsverhalten bei Laufstreifen von Fahrzeugluftreifen bewirkt.

Gelöst wird diese Aufgabe dadurch, dass das die Kautschukmischung wenigstens folgende Bestandteile enthält:
- mehr als 5 phr natürliches Polyisopren,
- wenigstens einen weiteren Dienkautschuk und
- 5 bis 50 phr wenigstens eines modifizierten Dien-Polymers A mit einem gewichtsmittleren Molekulargewicht M_{w} gemäß GPC von 500 bis 50000 g/mol, bevorzugt 4000 bis 40000 g/mol, welches mit einer Organosilicium-Gruppe entlang des Polymer-Rückgrats modifiziert ist.

Überraschenderweise hat sich herausgestellt, dass mit 5 bis 50 phr eines modifierten Dien-Polymer A, welches entlang der Polymer-Rückgrats und nicht nur an den Polymer-Kettenenden mit einer Organosilicium-Gruppe modifiziert ist, in der Kautschukmischung mit
mindestens 5 phr eines natürlichen Polyisoprens bei Verwendung in Fahrzeugluftreifen ein höheres Niveau im Zielkonflikt aus Rollwiderstandsverhalten und Bremsverhalten erzielt werden kann. Der Rollwiderstand wird deutlich verbessert, ohne dass das Nass- und das Trockenbremsen negativ beeinflusst werden. Gleichzeitig weist die Kautschukmischung eine gute Verarbeitbarkeit und eine verbesserte Grünfestigkeit auf.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird in dieser Schrift auf 100 Gewichtsteile der gesamten Masse aller in der Mischung vorhandenen hochmolekularen und dadurch festen, nicht flüssigen Kautschuke bezogen. Das modifizierte Dien-Polymer A ist kein hochmolekularer Kautschuk.

Das modifizierte Dien-Polymer A kann mit unterschiedlichsten Organosilicium-Gruppen modifiziert sein. Bevorzugt weist die Organosilicium-Gruppe einen Baustein gemäß Formel I) auf:

(R¹R²R³)Si-X- (I)

wobei R¹, R² und R³ unabhängig voneinander ausgewählt sind aus Methoxy-Gruppen, Ethoxy-Gruppen, Phenoxy-Gruppen, Methyl-Gruppen, Ethyl-Gruppen und Phenyl-Gruppen, wobei jeweils wenigstens eine der Gruppen R¹, R² und R³ eine Methoxy-Gruppe, eine Ethoxy-Gruppe oder eine Phenoxy-Gruppe ist, und wobei X eine divalente Alkyl-Gruppe mit 1 bis 18 Kohlenstoffatomen ist. Das Vorhandensein derartiger Bausteine am Polymer-Rückgrat, also entlang der Polymerkette wirkt sich besonders positiv auf den Rollwiderstand von Reifen aus.

Gemäß einer vorteilhaften Ausführungsform sind die Reste R¹, R² und R³ innerhalb eines Moleküls gleich.

Gemäß einer weiteren vorteilhaften Ausführungsform sind die Reste R¹, R² und R³ Methoxy- und/oder Ethoxy-Gruppen.

Die Organosilicium-Gruppen mit einen Baustein gemäß Formel I) können über unterschiedliche chemische Bindungen an das Polymer-Rückgrat gebunden sein, wie z. B. über Thioharnstoff-, Harnstoff- oder Amidgruppen.

Gemäß einer bevorzugten Weiterbildung der Erfindung ist X eine divalente Alkyl-Gruppe mit 2 bis 4, bevorzugt mit 3, Kohlenstoffatomen. Auf diese Weise werden besonders gute Wechselwirkungen mit anderen Mischungsbestandteilen erzielt.

Um den Rollwiderstand und das Bremsverhalten von Reifen weiter zu verbessern und eine gute Herstellbarkeit des Dien-Polymers A zu gewährleisten, hat es sich als vorteilhaft erwiesen, wenn die Zahl der Organosilicium-Gruppen pro Molekül im Mittel 0,5 bis 5 beträgt.

Das modifizierte Dien-Polymer A basiert auf der Polymerisierung von konjugierten Dienen. Dabei sind alle dem Fachmann bekannten konjugierten Diene einsetzbar, wie Butadien, Isopren und aromatische Vinylverbindungen.

Weitere konjugierte Diene sind beispielsweise 2,3-Dimethylbutadien, 2-Phenylbutadien, 1,3-Pentadien, 2-Methyl-1,3-Pentadien, 1,3-Hexadien, 1,3-Octadien, 1,3-Cyclohexadien, 2-Methyl-1,3-Octadien, 1,3,7-Octatrien, Myrcen und Chloropren.

Bevorzugt liegen der Polymerisation Butadien- und/oder Isopren-Monomere zugrunde.

Vorzugsweise handelt es sich bei dem Dien-Polymer A um ein flüssiges Polymer. Unter einem "flüssigen Polymer" wird im Rahmen der vorliegenden Erfindung ein Polymer verstanden, welches bei 25 °C eine Viskosität gemäß Brookfield-Methode (Methode nach DIN EN ISO 2555) von maximal 30 000 mPas, insbesondere von 500 bis 30000 mPas, aufweist.

Gemäß einer bevorzugten Ausführungsform der Erfindung ist das Dien-Polymer A ein Polybutadien und basiert somit auf Butadien-Monomeren.

Ist das Dien-Polymer A ein Polybutadien, weist es vorzugsweise einen Vinyl-Gehalt von 5 bis 80 %, vorzugsweise von 50 bis 70 %, auf. Die Glasübergangstemperatur T_{g} gemäß DSC beträgt -100 bis -30 °C, vorzugsweise -60 bis -40 °C. Hiermit ergeben sich besonders gute Rollwiderstandsindikatoren.

Erfindungswesentlich enthält die schwefelvernetzbare Kautschukmischung wenigstens ein modifiziertes Dien-Polymer A und zwar bevorzugt in Mengen von 1 bis 50 phr, besonders bevorzugt 5 bis 40 phr, ganz besonders bevorzugt 5 bis 30 phr.

Die erfindungsgemäße Kautschukmischung enthält mehr als 5 phr natürliches Polyisopren (NR). Natürliches Polyisopren wird verstanden als Kautschuk, der durch Ernte von Quellen wie Kautschukbäumen (Hevea brasiliensis) oder nicht-Kautschukbaumquellen (wie z. B. Guayule oder Löwenzahn (z. B. Taraxacum koksaghyz)) gewonnen werden kann. Unter natürlichem Polyisopren (NR) wird nicht synthetisches Polyisopren verstanden. Natürliche Polyisoprene aus verschiedenen Quellen können auch im Verschnitt eingesetzt werden. Der cis-1,4-Anteil im Naturkautschuk ist größer 99 Gew.-%.

Erfindungsgemäß ist die Kautschukmischung schwefelvernetzbar und enthält ferner wenigstens einen weiteren Dienkautschuk neben natürlichem Polyisopren.

Als Dienkautschuke werden Kautschuke bezeichnet, die durch Polymerisation oder Copolymerisation von Dienen und/oder Cycloalkenen entstehen und somit entweder in der Hauptkette oder in den Seitengruppen C=C-Doppelbindungen aufweisen.

Bei den weiteren Dienkautschuken kann es sich z. B. um synthetisches Polyisopren und/oder Polybutadien (Butadien-Kautschuk) und/oder Styrol-Butadien-Copolymer (Styrol-Butadien-Kautschuk) und/oder epoxidiertes Polyisopren und/oder Styrol-Isopren-Kautschuk und/oder Halobutyl-Kautschuk und/oder Polynorbornen und/oder Isopren-Isobutylen-Copolymer und/oder Ethylen-Propylen-Dien-Kautschuk handeln. Die Kautschuke können als reine Kautschuke oder in ölverstreckter Form eingesetzt werden.

Gemäß einer besonders bevorzugten Ausführungsform der Erfindung ist der weitere Dienkautschuk ausgewählt aus der Gruppe bestehend aus synthetischem Polyisopren (IR), Butadien-Kautschuk (BR), lösungspolymerisiertem Styrol-Butadien-Kautschuk (SSBR) und emulsionspolymerisiertem Styrol-Butadien-Kautschuk (ESBR). Eine derartige Kautschukmischung ist insbesondere für den Laufstreifen von Fahrzeugreifen geeignet. Die Kautschuke können im Verschnitt eingesetzt werden.

Bei dem synthetischen Polyisopren kann es sich sowohl um cis-1,4-Polyisopren als auch um 3,4-Polyisopren handeln. Bevorzugt ist allerdings die Verwendung von cis-1,4-Polyisoprenen mit einem cis 1,4 Anteil > 90 Gew.-%. Zum einen kann solch ein Polyisopren durch stereospezifische Polymerisation in Lösung mit Ziegler-Natta-Katalysatoren oder unter Verwendung von fein verteilten Lithiumalkylen erhalten werden. Die Polyisoprene können auch als Gemisch eingesetzt werden.

Bei dem Butadien-Kautschuk (BR, Polybutadien) kann es sich um alle dem Fachmann bekannten Typen mit einem M_{w} von 250000 bis 500000 g/mol handeln. Darunter fallen u. a. die sogenannten high-cis- und low-cis-Typen, wobei Polybutadien mit einem cis-Anteil größer oder gleich 90 Gew.-% als high-cis-Typ und Polybutadien mit einem cis-Anteil kleiner als 90 Gew.-% als low-cis-Typ bezeichnet wird. Ein low-cis-Polybutadien ist z. B. Li-BR (Lithium-katalysierter Butadien-Kautschuk) mit einem cis-Anteil von 20 bis 50 Gew.-%. Mit einem high-cis BR werden besonders gute Abriebeigenschaften sowie eine niedrige Hysterese der Kautschukmischung erzielt. Das eingesetzte Polybutadien kann mit Modifizierungen und Funktionalisierungen versehen sein. Bei der Modifizierung kann es sich um solche mit Hydroxy-Gruppen und/oder Ethoxy-Gruppen und/oder Epoxy-Gruppen und/oder Siloxan-Gruppen und/oder Amino-Gruppen und/oder Aminosiloxan und/oder Carboxy-Gruppen und/oder Phthalocyanin-Gruppen und/oder Silan-Sulfid-Gruppen handeln. Es kommen aber auch weitere, der fachkundigen Person bekannte, Modifizierungen, auch als Funktionalisierungen bezeichnet, in Frage. Bestandteil solcher Funktionalisierungen können Metallatome sein.

Bei dem Styrol-Butadien-Kautschuk (Styrol-Butadien-Copolymer) kann es sich sowohl um lösungspolymerisierten Styrol-Butadien-Kautschuk (SSBR) als auch um emulsionspolymerisierten Styrol-Butadien-Kautschuk (ESBR) handeln, wobei auch ein Gemisch aus wenigstens einem SSBR und wenigstens einem ESBR eingesetzt werden kann. Die Begriffe "Styrol-Butadien-Kautschuk" und "Styrol-Butadien-Copolymer" werden im Rahmen der vorliegenden Erfindung synonym verwendet. Bevorzugt sind in jedem Fall Styrol-Butadien-Copolymere mit einem M_{w} von 250000 bis 600000 g/mol (zweihundertfünfzigtausend bis sechshunderttausend Gramm pro Mol). Das oder die eingesetzte(n) Styrol-Butadien-Copolymere kann/können mit Modifizierungen und Funktionalisierungen versehen sein.

Eine besonders vorteilhafte Ausführungsform besteht darin, dass die Kautschukmischung 5 bis 30 phr wenigstens eines natürlichen Polyisoprens und 25 bis 80 phr wenigstens eines Styrol-Butadien-Kautschuks und 5 bis 50 phr wenigstens eines Butadien-Kautschuks enthält.

Vorzugsweise enthält die Kautschukmischung 40 bis 350 phr zumindest eines Füllstoffes. Dabei kann es sich um Füllstoffe, wie Ruße, Kieselsäuren, Alumosilicate, Kreide, Stärke, Magnesiumoxid, Titandioxid oder Kautschukgele handeln, wobei die Füllstoffe in Kombination eingesetzt werden können. Weiterhin sind Kohlenstoffnanoröhrchen (carbon nanotubes (CNT) inklusive diskreter CNTs, sogenannte hollow carbon fibers (HCF) und modifizierte CNT enthaltend eine oder mehrere funktionelle Gruppen, wie Hydroxy-, Carboxy und Carbonyl-Gruppen) denkbar. Auch Graphit und Graphene sowie sogenannte "carbon-silica dual-phase filler" sind als Füllstoff einsetzbar.

Ist in der Kautschukmischung Ruß enthalten, können alle dem Fachmann bekannten Ruß-Typen eingesetzt werden. Bevorzugt wird jedoch ein Ruß eingesetzt, der eine Jodadsorptionszahl gemäß ASTM D 1510 von 30 bis 180 g/kg, bevorzugt 30 bis 130 kg/g, und eine DBP-Zahl gemäß ASTM D 2414 von 80 bis 200 ml/100 g, bevorzugt 100 bis 200 ml/100g, besonders bevorzugt 100 bis 180 ml/100g, aufweist. Hiermit werden für die Anwendung im Fahrzeugreifen besonders gute Rollwiderstandsindikatoren (Rückprallelastizität bei 70 °C) bei guten sonstigen Reifeneigenschaften erzielt.

Zur Reduzierung des Rollwiderstandes hat es sich als vorteilhaft erwiesen, wenn die Kautschukmischung als Füllstoff Kieselsäure enthält. Das modifizierte Dien-Polymer A kann über die Organosilicium-Gruppe mit der Kieselsäure in Wechselwirkung treten.

Es können unterschiedlichste Kieselsäuren, wie "low surface area" oder hoch dispergierbare Kieselsäure, auch im Gemisch, zum Einsatz kommen. Besonders bevorzugt ist es, wenn eine fein verteilte, gefällte Kieselsäure verwendet wird, die eine CTAB-Oberfläche (gemäß ASTM D 3765) von 30 bis 350 m²/g, vorzugsweise von 110 bis 250 m²/g, aufweist. Als Kieselsäuren können sowohl konventionelle Kieselsäuren wie die des Typs VN3 (Handelsname) der Firma Evonik als auch hoch dispergierbare Kieselsäuren, so genannte HD-Kieselsäuren (z. B. Ultrasil 7000 der Firma Evonik), zum Einsatz kommen.

Vorzugsweise enthält die Kautschukmischung 10 bis 300 phr , bevorzugt 50 bis 170 phr, Kieselsäure, um eine gute Verarbeitbarkeit bei guten Reifeneigenschaften zu erzielen.

Zur Verbesserung der Verarbeitbarkeit und zur Anbindung der Kieselsäure und anderer ggf. vorhandener polarer Füllstoffe an den Dienkautschuk können Silan-Kupplungsagenzien in Kautschukmischungen eingesetzt werden. Hierbei können ein oder mehrere verschiedene Silan-Kupplungsagenzien in Kombination miteinander eingesetzt werden. Die Kautschukmischung kann somit ein Gemisch verschiedener Silane enthalten. Die Silan-Kupplungsagenzien reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Als Silan-Kupplungsagenzien können dabei alle dem Fachmann für die Verwendung in Kautschukmischungen bekannten Silan-Kupplungsagenzien verwendet werden. Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln: -SCN, -SH, -NH₂ oder -Sₓ- (mit x = 2 bis 8). So können als Silan-Kupplungsagenzien z. B. 3-Mercaptopropyltriethoxysilan, 3-Thiocyanato-propyltrimethoxysilan oder 3,3 `-Bis(triethoxysilylpropyl)polysulfide mit 2 bis 8 Schwefelatomen, wie z. B. 3,3 `-Bis(triethoxysilylpropyl)tetrasulfid (TESPT), das entsprechende Disulfid (TESPD) oder auch Gemische aus den Sulfiden mit 1 bis 8 Schwefelatomen mit unterschiedlichen Gehalten an den verschiedenen Sulfiden, verwendet werden. TESPT kann dabei beispielsweise auch als Gemisch mit Industrieruß (Handelsname X50S^{®} der Firma Evonik) zugesetzt werden.

Bevorzugt wird ein Silan-Gemisch eingesetzt, welches zu 40 bis 100 Gew.-% Disulfide, besonders bevorzugt 55 bis 85 Gew.-% Disulfide und ganz besonders bevorzugt 60 bis 80 Gew.-% Disulfide enthält. Ein solches Gemisch ist z.B. unter dem Handelsnamen Si 266^{®} der Firma Evonik erhältlich, welches z.B. in der DE 102006004062 A1 beschrieben ist. Auch geblockte Mercaptosilane, wie sie z. B. aus der WO 99/09036 bekannt sind, können als Silan-Kupplungsagens eingesetzt werden. Auch Silane, wie sie in der WO 2008/083241 A1, der WO 2008/083242 A1, der WO 2008/083243 A1 und der WO 2008/083244 A1 beschrieben sind, können eingesetzt werden. Verwendbar sind z. B. Silane, die unter dem Namen NXT (z.B. 3-(Octanoylthio)-1-Propyl-Triethoxysilan) in verschiedenen Varianten von der Firma Momentive, USA, oder solche, die unter dem Namen VP Si 363^{®} von der Firma Evonik Industries vertrieben werden. Einsetzbar sind auch sogenannte "silated core polysulfides" (SCP, Polysulfide mit silyliertem Kern), die z. B. in der US 20080161477 A1 und der EP 2 114 961 B1 beschrieben werden.

Gemäß einer bevorzugten Ausführungsform enthält die Kautschukmischung wenigstens ein Silan-Kupplungsagens, besonders bevorzugt wenigstens ein geblocktes und/oder wenigstens ein ungeblocktes Mercaptosilan. Die Silan-Kupplungsagenzien werden in dem Fachmann bekannten Mengen eingesetzt.

In der Kautschukmischung können außerdem Weichmacher in Mengen von 1 bis 300 phr, bevorzugt von 5 bis 150 phr, besonders bevorzugt von 15 bis 90 phr, enthalten sein. Als Weichmacher können alle dem Fachmann bekannten Weichmacher wie aromatische, naphthenische oder paraffinische Mineralölweichmacher, wie z.B. MES (mild extraction solvate) oder RAE (Residual Aromatic Extract) oder TDAE (treated distillate aromatic extract), oder Rubber-to-Liquid-Öle (RTL) oder Biomass-to-Liquid-Öle (BTL) bevorzugt mit einem Gehalt an polyzyklischen Aromaten von weniger als 3 Gew.-% gemäß Methode IP 346 oder Rapsöl oder Faktisse oder Flüssig-Polymere, wie flüssiges Polybutadien in nicht modifizierter Form eingesetzt werden. Der oder die Weichmacher werden bei der Herstellung der erfindungsgemäßen Kautschukmischung bevorzugt in wenigstens einer Grundmischstufe zugegeben.

Des Weiteren kann die Kautschukmischung übliche Zusatzstoffe in üblichen Gewichtsteilen enthalten, die bei deren Herstellung bevorzugt in wenigstens einer Grundmischstufe zugegeben werden. Zu diesen Zusatzstoffen zählen
a) Alterungsschutzmittel, wie z. B. N-Phenyl-N'-(1,3-dimethylbutyl)-p-phenylendiamin (6PPD), N,N'-Diphenyl-p-phenylendiamin (DPPD), N,N'-Ditolyl-p-phenylendiamin (DTPD), N-Isopropyl-N'-phenyl-p-phenylendiamin (IPPD), 2,2,4-Trimethyl-1,2-dihydrochinolin (TMQ),
b) Aktivatoren, wie z. B. Zinkoxid und Fettsäuren (z. B. Stearinsäure) oder Zinkkomplexe wie z. B. Zinkethylhexanoat,
c) Wachse,
d) Kohlenwasserstoffharze, wie ggf. insbesondere Klebharze
e) Mastikationshilfsmittel, wie z. B. 2,2'-Dibenzamidodiphenyldisulfid (DBD), und
f) Verarbeitungshilfsmittel, wie z.B. Fettsäuresalze, wie z.B. Zinkseifen, und Fettsäureester und deren Derivate.

Der Mengenanteil der Gesamtmenge an weiteren Zusatzstoffen beträgt 3 bis 150 phr, bevorzugt 3 bis 100 phr und besonders bevorzugt 5 bis 80 phr.

Die Vulkanisation der Kautschukmischung wird in Anwesenheit von Schwefel und/oder Schwefelspendern mit Hilfe von Vulkanisationsbeschleunigern durchgeführt, wobei einige Vulkanisationsbeschleuniger zugleich als Schwefelspender wirken können. Dabei ist der Beschleuniger ausgewählt aus der Gruppe bestehend aus Thiazolbeschleunigern und/oder Mercaptobeschleunigern und/oder Sulfenamidbeschleunigern und/oder Thiocarbamatbeschleunigern und/oder Thiurambeschleunigern und/oder Thiophosphatbeschleunigern und/oder Thioharnstoffbeschleunigern und/oder Xanthogenat-Beschleunigern und/oder Guanidin-Beschleunigern.

Bevorzugt ist die Verwendung eines Sulfenamidbeschleunigers, der ausgewählt ist aus der Gruppe bestehend aus N-Cyclohexyl-2-benzothiazolsufenamid (CBS) und/oder N,N-Dicyclohexylbenzothiazol-2-sulfenamid (DCBS) und/oder Benzothiazyl-2-sulfenmorpholid (MBS) und/oder N-tert-Butyl-2-benzothiazylsulfenamid (TBBS).

Außerdem kann die Kautschukmischung Vulkanisationsverzögerer enthalten.

Als schwefelspendende Substanz können dabei alle dem Fachmann bekannten schwefelspendenden Substanzen verwendet werden. Enthält die Kautschukmischung eine schwefelspendende Substanz, ist diese bevorzugt ausgewählt aus der Gruppe bestehend aus z. B. Thiuramdisulfiden, wie z. B. Tetrabenzylthiuramdisulfid (TBzTD), Tetramethylthiuramdisulfid (TMTD) oder Tetraethylthiuramdisulfid (TETD), Thiuramtetrasulfiden, wie z. B. Dipentamethylenthiuramtetrasulfid (DPTT), Dithiophosphaten, wie z. B. DipDis (Bis-(Diisopropyl)thiophosphoryldisulfid), Bis(O,O-2-ethylhexyl-thiophosphoryl)Polysulfid (z. B. Rhenocure SDT 50^{®}, Rheinchemie GmbH, Zinkdichloryldithiophosphat (z. B. Rhenocure ZDT/S^{®}, Rheinchemie GmbH) oder Zinkalkyldithiophosphat, und 1,6-Bis(N,N-dibenzylthiocarbamoyldithio)hexan und Diarylpolysulfiden und Dialkylpolysulfiden.

Auch weitere netzwerkbildende Systeme, wie sie beispielsweise unter den Handelsnamen Vulkuren^{®}, Duralink^{®} oder Perkalink^{®} erhältlich sind, oder netzwerkbildende Systeme, wie sie in der WO 2010/049216 A2 beschrieben sind, können in der Kautschukmischung eingesetzt werden. Das letztere System enthält ein Vulkanisationsmittel, welches mit einer Funktionalität größer vier vernetzt und zumindest einen Vulkanisationsbeschleuniger.

Der Kautschukmischung wird bei deren Herstellung bevorzugt wenigstens ein Vulkanisationsmittel ausgewählt aus der Gruppe bestehend aus Schwefel, Schwefelspender, Vulkanisationsbeschleuniger und Vulkanisationsmittel, die mit einer Funktionalität größer vier vernetzen, in der Fertigmischstufe zugegeben. Hierdurch lässt sich aus der gemischten Fertigmischung durch Vulkanisation eine schwefelvernetzte Kautschukmischung für die Anwendung im Fahrzeugluftreifen herstellen.

Die Begriffe "vulkanisiert" und "vernetzt" werden im Rahmen der vorliegenden Erfindung synonym verwendet.

Die Herstellung der Kautschukmischung erfolgt nach dem in der Kautschukindustrie üblichen Verfahren, bei dem zunächst in ein oder mehreren Mischstufen eine Grundmischung mit allen Bestandteilen außer dem Vulkanisationssystem (Schwefel und vulkanisationsbeeinflussende Substanzen) hergestellt wird. Durch Zugabe des Vulkanisationssystems in einer letzten Mischstufe wird die Fertigmischung erzeugt. Die Fertigmischung wird z. B. durch einen Extrusionsvorgang weiterverarbeitet und in die entsprechende Form gebracht. Anschließend erfolgt die Weiterverarbeitung durch Vulkanisation, wobei aufgrund des im Rahmen der vorliegenden Erfindung zugegebenen Vulkanisationssystems eine Schwefelvernetzung stattfindet.

Die Kautschukmischung wird für die Herstellung von Fahrzeugluftreifen, wie PKW-, Van- , LKW- oder Zweiradreifen, verwendet, wobei die Kautschukmischung zumindest den mit der Fahrbahn in Berührung kommenden Teil des Laufstreifens bildet.

Bei einem Fahrzeugluftreifen kann der Laufstreifen aus einer einzigen Mischung gemäß der Erfindung bestehen. Häufig weisen Fahrzeugluftreifen heute jedoch einen Laufstreifen mit einer sogenannten CapBase-Konstruktion auf. Unter "Cap" wird dabei der mit der Fahrbahn in Berührung kommende Teil des Laufstreifens verstanden, der radial außen angeordnet ist (Laufstreifenoberteil oder Laufstreifencap). Unter "Base" wird dabei der Teil des Laufstreifens verstanden, der radial innen angeordnet ist, und somit im Fahrbetrieb nicht oder nur am Ende des Reifenlebens mit der Fahrbahn in Berührung kommt (Laufstreifenunterteil oder Laustreifenbase). Bei einem Fahrzeugluftreifen mit einer solchen CapBase-Konstruktion ist zumindest die Kautschukmischung für die Cap gemäß Anspruch 1 ausgebildet.

Der erfindungsgemäße Fahrzeugluftreifen kann auch einen Laufstreifen aufweisen, der aus verschiedenen nebeneinander und/oder untereinander angeordneten Laufstreifenmischungen besteht (Multikomponentenlaufstreifen).

Bei der Herstellung des Fahrzeugluftreifens wird die Mischung als Fertigmischung vor der Vulkanisation in die Form eines Laufstreifens, bevorzugt wenigstens in die Form einer Laufstreifencap, gebracht und bei der Herstellung des Fahrzeugreifenrohlings wie bekannt aufgebracht. Der Laufstreifen, bevorzugt wenigstens die Laufstreifencap, kann auch in Form eines schmalen Kautschukmischungsstreifens auf einen Reifenrohling aufgewickelt werden.

Die Erfindung soll nun anhand von Vergleichs- und Ausführungsbeispielen, die in der Tabelle 1 zusammengefasst sind, näher erläutert werden. Vergleichsmischungen sind mit V, die erfindungsgemäße Mischung ist mit E gekennzeichnet.

Die Mischungsherstellung erfolgte nach den in der Kautschukindustrie üblichen Verfahren unter üblichen Bedingungen in drei Stufen in einem Labormischer bei dem zunächst in der ersten Mischstufe (Grundmischstufe) alle Bestandteile außer dem Vulkanisationssystem (Schwefel und vulkanisationsbeeinflussende Substanzen) vermischt wurden. In der zweiten Mischstufe wurde die Grundmischung nochmals durchmischt. Durch Zugabe des Vulkanisationssystems in der dritten Stufe (Fertigmischstufe) wurde die Fertigmischung erzeugt, wobei bei 90 bis 120 °C gemischt wurde.

Es wurden Reifentests mit den Mischungen der Tabelle 1 als Laufstreifencap durchgeführt, wobei folgende Testmethoden Anwendung fanden:
- Nassbremsen: ABS-Bremsen, Bremsdistanz aus 80 km/h, nasser Asphalt, niedriges µ (low µ)
- Trockenbremsen: ABS-Bremsen, Bremsdistanz aus 100 km/h, trockener Asphalt, hohes µ (high µ)
- Rollwiderstand: gemäß ISO 28580

Die ermittelten Werte wurden in Performance (Leistung) umgerechnet, wobei die Vergleichsmischung V1 bei jeder getesteten Eigenschaft auf 100 % Performance normiert wurde. Alle anderen Mischungsleistungen beziehen sich auf diese Vergleichsmischung V1. Hierbei bedeuten Werte < 100 % eine Verschlechterung in den Eigenschaften, während Werte > 100 % eine Verbesserung darstellen.

**Tabelle 1**

| **Bestandteile** | **Einheit** | **1(V)** | **2(V)** | **3(V)** | **4(E)** |
|---|---|---|---|---|---|
| Naturkautschuk | phr | 10 | 10 | 10 | 10 |
| Butadienkautschuk | phr | 20 | 20 | 20 | 20 |
| SSBR | phr | 70 | 70 | 70 | 70 |
| flüssiges Polybutadien 1^{a} | phr | 12 | 12 | 12 | 12 |
| mod. flüssiges Polybutadien 2^{b} | phr | - | 6 | 12 | - |
| modifiziertes Dien-Polymer A^{c} | phr | - | - | - | 12 |
| Ruß N339 | phr | 5 | 5 | 5 | 5 |
| Kieselsäure | phr | 125 | 125 | 125 | 125 |
| Weichmacher | phr | 39 | 39 | 39 | 39 |
| Zusatzstoffe | phr | 17 | 17 | 17 | 17 |
| Silan-Kupplungsagens^{d} | phr | 13,3 | 13,3 | 13,3 | 13,3 |
| Beschleuniger | phr | 5,4 | 5,4 | 5,4 | 5,4 |
| Schwefel | phr | 0,8 | 0,8 | 0,8 | 0,8 |

| **Eigenschaften** | | | | | |
|---|---|---|---|---|---|
| Rollwiderstand | % | 100 | 106 | 109 | 106 |
| Nassbremsen | % | 100 | 98 | 96 | 100 |
| Trockenbremsen | % | 100 | 98 | 97 | 100 |

| | | | | | |
|---|---|---|---|---|---|
| ^{a}flüssiges Polybutadien, Vinyl-Anteil = 28 %, Mw = 5800 g/mol **^{b}**mit Triethoxysilangruppen endgruppenmodifiziertes flüssiges Polybutadien, Mw = 8200 g/mol, Tg = -47 °C, Vinyl-Anteil = 64 %, Funktionalisierungsgrad 1,5 ^{c}entlang des Polymer-Rückgrats mit Triethoxysilangruppen modifiziertes flüssiges Polybutadien, Mw = 6840 g/mol, Tg = -50 °C, Vinyl-Anteil = 65 %, Funktionalisierungsgrad 2,0 ^{d}NXT, Fa. Momentive: 3-(Octanoylthio)-1-Propyl-Triethoxysilan | | | | | |

Der Tabelle 1 kann man entnehmen, dass nur durch die Verwendung des entlang des Polymer-Rückgrats modifizierten flüssigen Polybutadiens eine Verbesserung des Rollwiderstandes bei gleichzeitig gutem Nass- und Trockenbremsverhalten erzielt werden kann. Mit einem flüssigen Polybutadien, welches nur an den Kettenenden mit der gleichen Gruppe modifiziert ist, gelingt dies nicht (s. 2(V) und 3(V)). In Kombination mit 10 phr natürlichem Polyisopren erhält man bei der erfindungsgemäßen Mischung 4(E) eine gute Verarbeitbarkeit und eine gute Grünfestigkeit.

## Patentansprüche

1. Schwefelvernetzbare Kautschukmischung, enthaltend wenigstens folgende Bestandteile:
- mehr als 5 phr natürliches Polyisopren,
- wenigstens einen weiteren Dienkautschuk und
- 5 bis 50 phr wenigstens eines modifizierten Dien-Polymers A mit einem gewichtsmittleren Molekulargewicht M_{w} gemäß GPC von 500 bis 50000 g/mol, bevorzugt 4000 bis 40000 g/mol, welches mit einer Organosilicium-Gruppe entlang des Polymer-Rückgrats modifiziert ist.

2. Schwefelvernetzbare Kautschukmischung nach Anspruch 1, **dadurch gekennzeichnet, dass** die Organosilicium-Gruppe einen Baustein gemäß Formel I) aufweist:
(R¹R²R³)Si-X- (I)
wobei R¹, R² und R³ unabhängig voneinander ausgewählt sind aus Methoxy-Gruppen, Ethoxy-Gruppen, Phenoxy-Gruppen, Methyl-Gruppen, Ethyl-Gruppen und Phenyl-Gruppen, wobei jeweils wenigstens eine der Gruppen R¹, R² und R³ eine Methoxy-Gruppe, eine Ethoxy-Gruppe oder eine Phenoxy-Gruppe ist, und wobei X eine divalente Alkyl-Gruppe mit 1 bis 18 Kohlenstoffatomen ist.

3. Schwefelvernetzbare Kautschukmischung nach Anspruch 2, **dadurch gekennzeichnet, dass** X eine divalente Alkyl-Gruppe mit 2 bis 4 Kohlenstoffatomen, bevorzugt 3 Kohlenstoffatomen, ist.

4. Schwefelvernetzbare Kautschukmischung nach zumindest einem der vorhergehenden Ansprüche, **dadurch gekennzeichnet, dass** die Zahl der Organosilicium-Gruppen pro Molekül im Mittel 0,5 bis 5 beträgt.

5. Schwefelvernetzbare Kautschukmischung nach zumindest einem der vorhergehenden Ansprüche, **dadurch gekennzeichnet, dass** das Dien-Polymer A ein flüssiges Polymer ist.

6. Schwefelvernetzbare Kautschukmischung nach zumindest einem der vorhergehenden Ansprüche, **dadurch gekennzeichnet, dass** das Dien-Polymer A ein Polybutadien ist.

7. Schwefelvernetzbare Kautschukmischung nach zumindest einem der vorhergehenden Ansprüche, **dadurch gekennzeichnet, dass** der zumindest eine weitere Dienkautschuk ausgewählt ist aus der Gruppe bestehend aus synthetischem Polyisopren (IR), Butadien-Kautschuk (BR), lösungspolymerisiertem Styrol-Butadien-Kautschuk (SSBR) und emulsionspolymerisiertem Styrol-Butadien-Kautschuk (ESBR).

8. Schwefelvernetzbare Kautschukmischung nach zumindest einem der vorhergehenden Ansprüche, **dadurch gekennzeichnet, dass** sie 10 bis 300 phr wenigstens einer Kieselsäure enthält.

9. Schwefelvernetzbare Kautschukmischung nach zumindest einem der vorhergehenden Ansprüche, **dadurch gekennzeichnet, dass** sie wenigstens ein Silan-Kupplungsagens, bevorzugt wenigstens ein geblocktes und/oder wenigstens ein ungeblocktes Mercaptosilan, enthält.

10. Fahrzeugluftreifen mit einem Laufstreifen, dessen zumindest mit der Fahrbahn in Berührung kommender Teil aus einer mit Schwefel vulkanisierten Kautschukmischung nach einem der Ansprüche 1 bis 9 besteht.

## Claims

1. Sulfur-crosslinkable rubber mixture containing at least the following constituents:
- more than 5 phr of natural polyisoprene,
- at least one further diene rubber and
- 5 to 50 phr of at least one modified diene polymer A having a weight-average molecular weight M_{w} according to GPC of 500 to 50 000 g/mol, preferably 4000 to 40 000 g/mol, which is modified with an organosilicon group along the polymer backbone.

2. Sulfur-crosslinkable rubber mixture according to Claim 1, **characterized in that** the organosilicon group comprises a unit according to formula I):
(R¹R²R³)Si-X- (I)
wherein R¹, R² and R³ are each independently of one another selected from methoxy groups, ethoxy groups, phenoxy groups, methyl groups, ethyl groups and phenyl groups, wherein in each case at least one of the groups R¹, R² and R³ is a methoxy group, an ethoxy group or a phenoxy group and wherein X is a divalent alkyl group having 1 to 18 carbon atoms.

3. Sulfur-crosslinkable rubber mixture according to Claim 2, **characterized in that** X is a divalent alkyl group having 2 to 4 carbon atoms, preferably 3 carbon atoms.

4. Sulfur-crosslinkable rubber mixture according to at least one of the preceding claims, **characterized in that** the number of organosilicon groups per molecule is on average 0.5 to 5.

5. Sulfur-crosslinkable rubber mixture according to at least one of the preceding claims, **characterized in that** the diene polymer A is a liquid polymer.

6. Sulfur-crosslinkable rubber mixture according to at least one of the preceding claims, **characterized in that** the diene polymer A is a polybutadiene.

7. Sulfur-crosslinkable rubber mixture according to at least one of the preceding claims, **characterized in that** the at least one further diene rubber is selected from the group consisting of synthetic polyisoprene (IR), butadiene rubber (BR), solution-polymerized styrene-butadiene rubber (SSBR) and emulsion-polymerized styrene-butadiene rubber (ESBR).

8. Sulfur-crosslinkable rubber mixture according to at least one of the preceding claims, **characterized in that** it contains 10 to 300 phr of at least one silica.

9. Sulfur-crosslinkable rubber mixture according to at least one of the preceding claims, **characterized in that** it contains at least one silane coupling agent, preferably at least one blocked and/or at least one unblocked mercaptosilane.

10. Pneumatic vehicle tire having a tread whose at least roadway-contacting portion is composed of a sulfur-vulcanized rubber mixture according to any of Claims 1 to 9.

## Revendications

1. Mélange de caoutchoucs réticulable au soufre, contenant au moins les constituants suivants :
- plus de 5 phr de polyisoprène naturel,
- au moins un autre caoutchouc diène et
- 5 à 50 phr d'au moins un polymère de diène A modifié ayant une masse moléculaire moyenne en poids M_{w} selon GPC de 500 à 50 000 g/mole, de préférence 4 000 à 40 000 g/mole, qui est modifié le long du squelette du polymère avec un groupe organosilicié.

2. Mélange de caoutchoucs réticulable au soufre selon la revendication 1, **caractérisé en ce que** le groupe organosilicié comporte un composant selon la formule I) :
(R¹R²R³)Si-X- (I)
dans laquelle R¹, R² et R³ sont choisis indépendamment les uns des autres parmi des groupes méthoxy, des groupes éthoxy, des groupes phénoxy, des groupes méthyle, des groupes éthyle et des groupes phényle, au moins un des groupes R¹, R² et R³ étant respectivement un groupe méthoxy, un groupe éthoxy ou un groupe phénoxy, et dans laquelle X est un groupe alkyle divalent ayant de 1 à 18 atomes de carbone.

3. Mélange de caoutchoucs réticulable au soufre selon la revendication 2, **caractérisé en ce que** X est un groupe alkyle divalent ayant de 2 à 4 atomes de carbone, de préférence 3 atomes de carbone.

4. Mélange de caoutchoucs réticulable au soufre selon au moins l'une des revendications précédentes, **caractérisé en ce que** le nombre des groupes organosiliciés par molécule vaut en moyenne de 0,5 à 5.

5. Mélange de caoutchoucs réticulable au soufre selon au moins l'une des revendications précédentes, **caractérisé en ce que** le polymère de diène A est un polymère liquide.

6. Mélange de caoutchoucs réticulable au soufre selon au moins l'une des revendications précédentes, **caractérisé en ce que** le polymère de diène A est un polybutadiène.

7. Mélange de caoutchoucs réticulable au soufre selon au moins l'une des revendications précédentes, **caractérisé en ce que** ledit au moins un autre caoutchouc diène est choisi dans le groupe constitué par le polyisoprène (IR) synthétique, le caoutchouc butadiène (BR), le caoutchouc styrène-butadiène polymérisé en solution (SSBR) et le caoutchouc styrène-butadiène polymérisé en émulsion (ESBR).

8. Mélange de caoutchoucs réticulable au soufre selon au moins l'une des revendications précédentes, **caractérisé en ce qu'**il contient de 10 à 300 phr d'au moins une silice.

9. Mélange de caoutchoucs réticulable au soufre selon au moins l'une des revendications précédentes, **caractérisé en ce qu'**il contient au moins un agent de couplage silane, de préférence au moins un mercaptosilane bloqué et/ou au moins un mercaptosilane non bloqué.

10. Pneumatique de véhicule comportant une bande de roulement, dont au moins la partie qui entre en contact avec la voie de circulation consiste en un mélange de caoutchoucs vulcanisé au soufre selon l'une des revendications 1 à 9.
